# EUROPEAN PATENT APPLICATION

(11) **EP 2 061 260 A2**
(43) Date of publication of application: **20.05.2009**
(21) Application number: 08159908.6
(22) Date of filing: 08.07.2008
(51) Int. Cl.: H04N 9/804

(54) **Apparatus and method for storing digital broadcasting data in set-top box**

(30) Priority: 14.11.2007 KR 20070116345
(71) Applicant: Handan Broadinfocom Co., Ltd., Seoul 135-080 (KR)
(72) Inventor: Lee, Sang Gon, Gyeonggi-Do (KR)
(74) Representative: TBK-Patent

(57) **Abstract**

The apparatus for storing digital broadcasting data comprises a stream queue (260) receiving a transport stream of digital broadcasting data, a DMA (270) controlling the stream queue (260) to output a unit storage block when the transport stream of the stream queue (260) has a size greater than the size of the unit storage block, a controller (290) generating a block header corresponding to the output unit storage block, and a storage unit (280) storing a unit block including the output unit storage block and the generated block header.

## Description

### BACKGROUND OF THE INVENTION

### Field of the Invention

The present invention relates to a set-top box, and more particularly, to an apparatus and a method for storing digital broadcasting data in a set-top box.

### Description of the Related Art

Digital broadcasting is television broadcasting that compresses television signals in a digital manner of encoding an information signal and recording the encoded information signal and transmits the compressed television signals. Conventional analog television broadcasting can load only a single image on a single radio wave, and thus it should transmit a voice signal through another radio wave. On the contrary, digital broadcasting can load a plurality of images or voices on a single radio wave and compress information without deteriorating the quality of the information.

To receive a digital broadcasting service, a set-top box for converting a received broadcasting signal into a form suitable for a display device is required as a receiving apparatus.

Digital broadcast includes a plurality of service channels respectively allocated to contents providers that provide broadcasting contents. Furthermore, programs are assigned to the service channels according to time. Contents may include advertisements. In the case of pay broadcast, digital broadcasting data can be scrambled and transmitted. Moreover, digital broadcasting multiplexes a plurality of service channels and transmits the multiplexed service channels. Accordingly, a set-top box is required to identify the plurality of service channels and scrambled data for the respective service channels, and thus the set-top box must simultaneously process the plurality of channels using a limited system resource. Therefore, a rapid data processing method is needed.

### SUMMARY OF THE INVENTION

Accordingly, the present invention has been made to solve the above-mentioned problems occurring in the conventional art, and a primary object of the present invention is to provide a digital broadcasting data storing method and apparatus capable of independently processing files required to be respectively processed.

Another object of the present invention is to provide a digital broadcasting data storing method and apparatus capable of processing files at a high speed.

To accomplish the objects of the present invention, there is provided a method for storing digital broadcasting data, which comprises the steps of receiving digital broadcasting data, and storing the digital broadcasting data as a file divided into unit blocks.

To accomplish the objects of the present invention, there is also provided an apparatus for storing digital broadcasting data, which comprises a stream queue receiving a transport stream of received digital broadcasting data, a DMA controlling the stream queue to output a unit storage block when the transport stream of the stream queue has a size greater than the size of the unit storage block, a controller generating a block header corresponding to the output unit storage block, and a storage unit storing a unit block including the output unit storage block and the generated block header.

To accomplish the objects of the present invention, there is also provided a method for storing digital broadcasting data, comprising the steps of receiving and processing digital broadcasting data and outputting a transport stream, when the output transport stream has a size greater than a unit storage block, outputting the unit storage block, generating a block header corresponding to the output unit storage block, and storing a unit block including the output unit storage block and the generated block header.

According to the present invention, digital broadcasting data is divided into blocks having a size corresponding to a common multiple of a basic unit of the digital broadcasting data and a basic unit of a storage unit and stored so that both a basic unit of processing broadcasting data and a basic unit of storing the broadcasting data can be satisfied. Thus, the digital broadcasting data can be independently processed. Accordingly, files required to be discriminately processed can be independently processed through rapid access. This increases a data processing speed.

### BRIEF DESCRIPTION OF THE DRAWINGS

Further objects and advantages of the invention can be more fully understood from the following detailed description taken in conjunction with the accompanying drawings, in which:
FIG. 1 illustrates a unit storage block of a file structure according to an embodiment of the present invention;
FIG. 2 illustrates a file structure including a plurality of unit blocks according to an embodiment of the present invention;
FIG. 3 is a diagram for explaining a stream queue for storing data in the file structure according to the embodiment of the present invention;
FIG. 4 illustrates a configuration of an apparatus for storing digital broadcasting data according to an embodiment of the present invention; and
FIG. 5 is a flow chart of a method for storing digital broadcasting data according to an embodiment of the present invention.

### DETAILED DESCRIPTION OF EXEMPLARY EMBODIMENTS OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art.

Terms used in embodiments of the present invention are defined as follows. "Channel" means a frequency channel selected by a tuner and "service" means a channel allocated to a contents provider (for example, a broadcasting station) that provides digital broadcasting contents transmitted through a selected channel, that is, a channel of a broadcasting station, which corresponds to a service channel identified by a program identifier or a product identifier (PID). In the embodiments of the present invention, the channel is used as "physical channel" and the service is used as "service channel" in order to prevent confusion occurring when the terms are used. Digital broadcasting transmits a plurality of service channels through a single physical channel. The physical channel means a channel frequency set to a tuner and the service channel means a broadcasting station in the physical channel. The service channel can be identified according to a combination of PID, an IP address and/or port information.

Although a set-top box (referred to as "STB" hereinafter) is used as a digital broadcasting data storing apparatus in the embodiments of the present invention, the present invention is not limited thereto. An STB receives broadcasting data and provides the received broadcasting data to a display device and an audio device. An STB according to an embodiment of the present invention has a personal video recorder (PVR) function that stores received broadcasting data in a storage unit such as a hard disk and provides the stored broadcasting data to a display device and an audio device at the request of a user.

Accordingly, it is apparent that an apparatus for storing digital broadcasting data according to an embodiment of the present invention can be applied to terminals, information communication appliances and multimedia devices capable of receiving digital broadcasting data and storing the received digital broadcasting data in a predetermined storage unit and application thereof.

Preferred embodiments of the present invention will now be explained with reference to the attached drawings.

The present invention proposes a file structure by which broadcasting data corresponding to a plurality of service channels received by an STB is stored in a storage unit of the STB by predetermined block units without loss of the broadcasting data at a high speed so as to rapidly process the broadcasting data block by block.

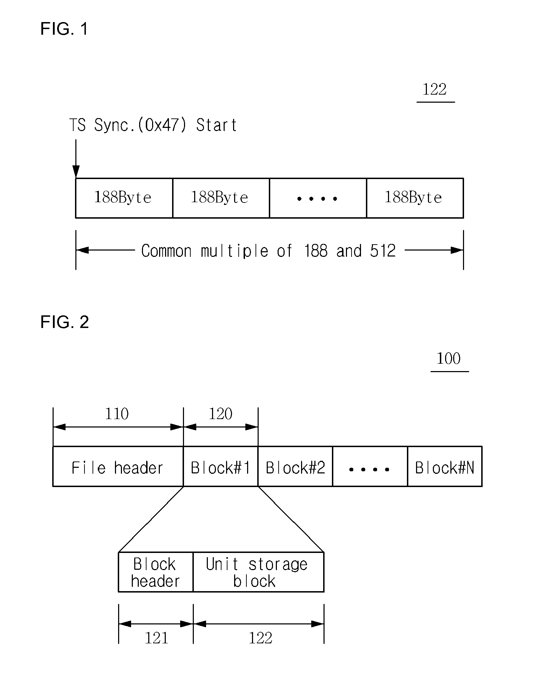

The file structure is described in more detail. FIG. 1 illustrates a unit storage block 122 of the file structure according to an embodiment of the present invention. Referring to FIG. 1, the size of the unit storage block 122 according to the embodiment of the present invention corresponds to a common multiple of a basic unit of received broadcasting data and a basic unit of a storage unit.

More specifically, digital broadcasting transmits an elementary stream (ES) corresponding to digital audio and video data, a packetized elementary stream (PES) obtained by packetizing the ES, and a transport stream obtained by packetizing the PES. Here, a basic unit of the transport stream corresponds to a packet. A single packet of the transport stream has a size of 188 byte. The packet size can depend on IPv4 or IPv6 protocol.

When the storage unit of an STB is a hard disk, the storage unit can use a sector that is a basic read/write unit of AT attachment (ATA) and integrated drive electronics (IDE) standards as a basic unit. The sector has a size of 512 byte and the sector size can depend on standard.

Accordingly, the size of the unit storage block 122 according to the embodiment of the present invention can correspond to a common multiple of 188 byte and 512 byte. It is desirable that the start point of the unit storage block 122 is a synchronization byte of a single packet of the transport stream, that is, 0x47.

As described above, when the size of the unit storage block 122 is set to a common multiple of the basic unit of a transport stream and the basic unit of the storage unit, both a basic unit of processing broadcasting data in an STB and a basic unit of storing the broadcasting data are satisfied, and thus the STB can independently process respective unit storage blocks.

Here, the common multiple can be changed according to characteristic of the STB or digital broadcasting service form. That is, any common multiple greater than the least common multiple can be used.

The file structure including the aforementioned unit storage block 22 according to an embodiment of the present invention will now be explained. FIG. 2 illustrates a file structure including a plurality of unit blocks 120 according to an embodiment of the present invention.

Referring to FIGS. 1 and 2, a file 100 according to an embodiment of the present invention includes a header 110 and the plurality of unit blocks 120. Here, the file 100 corresponds to a transport stream storing a single content of at least one service channel. Accordingly, the file header 110 stores information of the transport stream. A single content consists of unit blocks 120.

Each unit block 120 includes a block header 121 and a unit storage block 122. The block header 121 stores link information, scramble information and position information of the unit storage block 122, and information on the transport stream including the unit block 120. The scramble information represents whether the unit storage block 122 is scrambled.

The block header 121 can store basic information, packet variations and correlation of packets of the transport stream, scramble information, position information of the unit block 120, information on the connection of neighboring unit blocks 120 and so on.

Meantime, according to digital video broadcasting (DVB) standard, a service provider providing broadcasting data transmits video and audio data with a service information (SI) table when transmitting digital broadcasting data. The SI table can include a program association table (PAT) and a program map table (PMT). An STB searches data according to an identifier (for example, PID) of a corresponding service channel with reference to the SI table and stores or reproduces the searched data. Accordingly, when the aforementioned information is stored in the block header 121 as described above, the STB can find the position of the file corresponding to the service channel and reproduce or store the file without reference to the SI table. Accordingly, a cumbersome process of additionally storing the SI table can be omitted. In particular, storing and descrambling operations can be performed with reference to the block header 121.

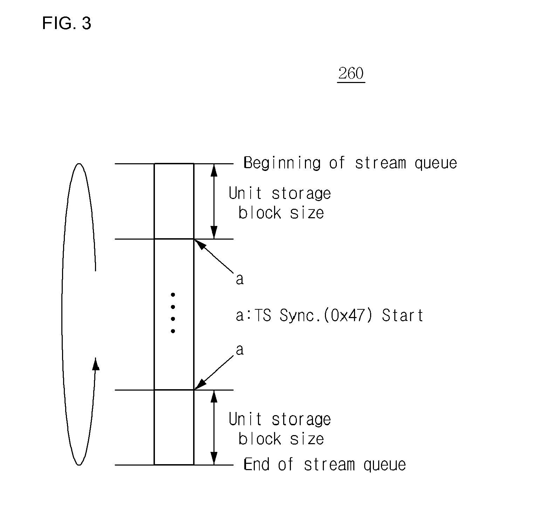

A stream queue for forming the aforementioned file structure will now be explained. FIG. 3 is a diagram for explaining a stream queue 260 for storing data in the file structure according to the embodiment of the present invention.

Referring to FIGS. 1, 2 and 3, the stream queue 260 is a circular queue having a size corresponding to a common multiple of a basic unit of received broadcasting data and a basic unit of a storage unit. That is, the stream queue 260 has a basic unit corresponding to a common multiple of the size of a single packet of a transport stream, 188 byte, and the size of a single sector of a hard disk, 512 byte. This is for the purpose of dividing data into unit storage blocks 122. Furthermore, the start point a of each unit storage block of the stream queue 260 corresponds to the synchronization byte of a transport stream, that is, 0x47. This is for the purpose of forming a single independent processing unit, as described above.

The stream queue 260 receives a transport stream, divides the transport stream into unit storage blocks 122 and outputs the unit storage blocks 122 when the received transport stream has a size greater than the unit storage block 122. Whenever the unit storage block 122 is output, a unit block 120 including the output unit storage block 122 and the block header 121 of the output unit storage block 122 are stored in the storage unit.

Here, the unit block 120 is stored in the storage unit in a direct memory access (DMA) manner. This can save system resources.

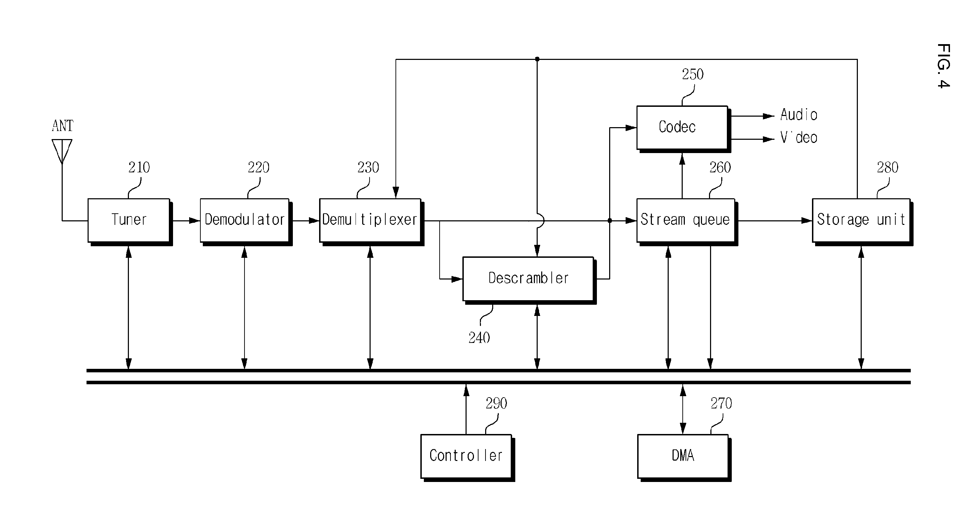

A digital broadcasting storing apparatus storing the aforementioned file structure will now be explained. FIG. 4 illustrates a configuration of an apparatus for storing digital broadcasting data according to an embodiment of the present invention.

Referring to FIGS. 1, 2, 3 and 4, the apparatus for storing digital broadcasting data according to the embodiment of the present invention includes a tuner 210, a demodulator 220, a demultiplexer 230, a descrambler 240, a codec 250, a stream queue 260, a DMA 270, a storage unit 280, and a controller 290.

The tuner 210 tunes a desired physical channel under the control of the controller 290. Accordingly, the tuner 210 receives digital broadcasting data according to a physical channel frequency set by the controller 290. The tuner 210 is set to a physical channel frequency through which a service channel selected by a user is transmitted and receives signals of service channels of the set physical channel. The tuner 210 can include a phase locked loop (PLL) generating a frequency for setting the physical channel, a mixer for mixing the received digital broadcasting data with the physical channel frequency generated by the PLL to output digital broadcasting data of the set physical channel, and a band pass filter for filtering signals of the set physical channel frequency.

The demodulator 220 demodulates the digital broadcasting data tuned by the tuner 210.

The demultiplexer 230 selects at least one of a plurality of transport streams of the digital broadcasting data under the control of the controller 290 and outputs a transport stream of a desired service channel. A transport stream includes an audio stream, a video stream and a data stream. The data stream can include information on the file structure of digital broadcasting data and broadcasting information. This information can include file position information according to IPv4 or IPv6 protocol, a PSI table, an SI table, an electronic service guide (ESG), an electronic program guide (EPG) and so on.

The controller 290 analyzes the digital broadcasting data output from the demultiplexer 230, transmits the digital broadcasting data to the descrambler 240 when the digital broadcasting data is scrambled, and sends the digital broadcasting data to the stream queue 260 when the digital broadcasting data is not scrambled.

The descrambler 240 descrambles the digital broadcasting data when the digital broadcasting data is scrambled data. The descrambler 240 descrambles the scrambled data under the control of the controller 290.

The descrambler 240 outputs a transport stream to the codec 250 or the stream queue 260 according to protocol. When the transport stream is not scrambled, the output of the demultiplexer 230 is input to the codec 250 or the stream queue 260.

The codec 250 includes a video codec and an audio codec and decodes the received transport stream. For example, a video stream can be decoded using an H.264 or MPEG4 codec.

The stream queue 260 sequentially receives transport streams, outputs the transport streams as unit storage blocks 122 and stores the unit storage blocks in the storage unit 280. The unit storage blocks 122 are stored according to a DMA method in the embodiment of the present invention. The DMA method directly stores data in the storage unit 280 without being controlled by the controller 290.

That is, when a transport stream having a size greater than the size of a unit storage block is input to the stream queue 260, the transport stream is automatically divided into unit storage blocks, output and stored in the storage unit 280 without using system resources allocated thereto. Accordingly, system resources can be saved and rapid data processing can be achieved.

The DMA 270 controls the stream queue 260 to output a transport stream stored in the stream queue 260 as unit storage blocks 22 when the transport stream has a size greater than the size of a unit storage block.

The storage unit 280 stores the unit block 120 according to the embodiment of the present invention. The storage unit 280 can be configured in the form of a hard disk. Accordingly, the storage unit 280 can has a sector as a basic storing unit.

The controller 290 controls a data flow or a control signal flow of the STB according to the embodiment of the present invention. For example, the controller 290 can control data flows of the functional blocks 210 through 280 and generates a control signal for the control.

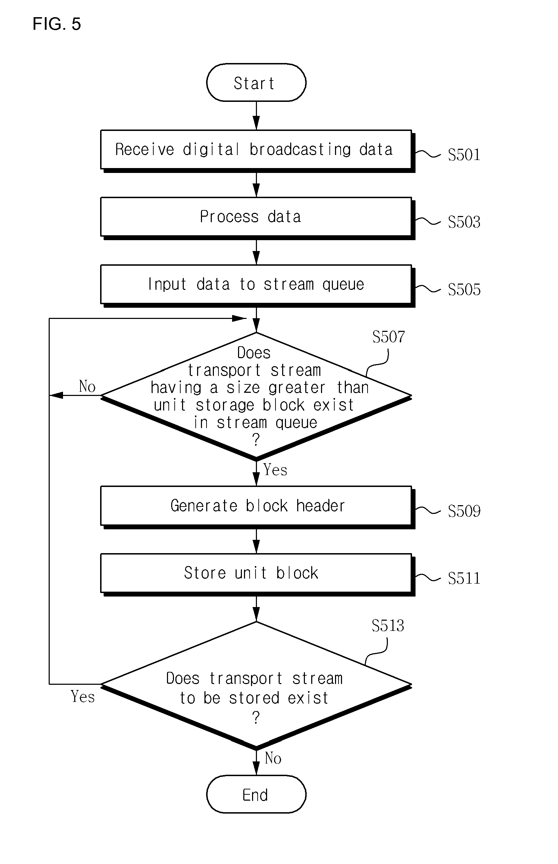

A method for storing digital broadcasting data according to an embodiment of the present invention will now be explained. FIG. 5 is a flow chart of the method for storing digital broadcasting data according to the embodiment of the present invention.

Referring to FIGS. 1 through 5, the controller 290 of the STB receives digital broadcasting data through the tuner 210 in operation S501, processes the digital broadcasting data in operation S503 and sequentially outputs transport streams of the digital broadcasting data. Here, the digital broadcasting data is processed in such a manner that the tuner 210 tunes the digital broadcasting data and the demodulator 220 demodulate the digital broadcasting data and outputs the digital broadcasting data as transport streams. Here, the controller 290 can selectively descramble the transport streams through the descrambler 240 when the transport streams are scrambled.

The controller 290 demultiplexes the transport streams through the demultiplexer 260 and provides the demultiplexed transport streams to the stream queue 260 in operation S505.

Then, the DMA 270 determines whether a transport stream having a size greater than the size of the unit storage block 122 exists in the stream queue 260 in operation S507. When the transport stream having a size greater than the size of the unit storage block 122 exists in the stream queue 260, the controller 290 generates a block header 121 in operation S509 and stores a unit block 120 including the block header 121 and the unit storage block 122 in the storage unit 280 in operation S511.

The DMA 270 determines whether there is more transport stream to be stored in operation S513. When there is more transport stream to be stored, the DMA 270 repeats operations S507 through S511. When any transport stream does not exist, the process is finished.

According to the embodiment of the present invention, when the unit storage block 122 having a size corresponding to a common multiple of the basic unit of transport streams and the basic unit of the storage unit is formed, both a basic unit of processing broadcasting data and a basic unit of storing the broadcasting data are satisfied, and thus respective unit storage blocks 122 can be independently processed.

Status information of each unit block 120 can be stored in the block header 121 in operation S509. That is, respective unit blocks 120 can be stored discriminately. For example, information on whether data is scrambled (scramble information) can be divided and respectively stored as a scrambled unit block 120 and a descrambled unit block 120. In this case, the controller 290 can rapidly access and descramble only the scrambled unit block 120 stored in the storage unit 280. According to the present invention, unit blocks 120 distinguished from each other can be rapidly accessed and processed.

While the present invention has been particularly shown and described with reference to exemplary embodiments thereof, it will be understood by those of ordinary skill in the art that various changes in form and details may be made therein without departing from the spirit and scope of the present invention as defined by the following claims.

An apparatus and a method for storing digital broadcasting data are provided. The apparatus for storing digital broadcasting data comprises a stream queue receiving a transport stream of received digital broadcasting data, a DMA controlling the stream queue to output a unit storage block when the transport stream of the stream queue has a size greater than the size of the unit storage block, a controller generating a block header corresponding to the output unit storage block, and a storage unit storing a unit block including the output unit storage block and the generated block header.

## Claims

1. A method for storing digital broadcasting data, comprising the steps of:
receiving digital broadcasting data; and
storing the digital broadcasting data as a file divided into unit blocks.

2. The method according to claim 1, wherein the file has at least one content and includes a file header storing transport stream information of the content and at least one unit block.

3. The method according to claim 2, wherein the unit block includes a unit storage block having a size corresponding to a common multiple of a basic unit of the digital broadcasting data and a basic unit of a storage unit, and a block header storing link information, scramble information and position information of the unit storage block and information on the transport stream including the unit block.

4. The method according to claim 3, wherein the link information represents a sequence of unit storage blocks, the position information represents the position at which the unit storage block is stored, and the scramble information represents whether the unit storage block is scrambled.

5. The method according to claim 3, wherein the basic unit of the digital broadcasting data is a packet of a transport stream, and the basic unit of the storage unit is a sector.

6. The method according to claim 1, wherein the step of storing the digital broadcasting data comprises the steps of:
dividing a transport stream of the digital broadcasting data into unit storage blocks;
generating a block header corresponding to each of the unit storage blocks; and
storing a unit block consisting of the block header and the corresponding unit storage block.

7. An apparatus for storing digital broadcasting data, comprising:
a stream queue receiving a transport stream of received digital broadcasting data;
a DMA controlling the stream queue to output a unit storage block when the transport stream of the stream queue has a size greater than the size of the unit storage block;
a controller generating a block header corresponding to the output unit storage block; and
a storage unit storing a unit block including the output unit storage block and the generated block header.

8. The apparatus according to claim 7, wherein the unit storage block has a size corresponding to a common multiple of a basic unit of the digital broadcasting data and a basic unit of the storage unit, and the block header includes link information, scramble information and position information of the unit storage block and information on the transport stream including the unit block.

9. The apparatus according to claim 8, wherein the basic unit of the digital broadcasting data is a packet of a transport stream and the basic unit of the storage unit is a sector.

10. The apparatus according to claim 8, wherein the link information represents a sequence of unit storage blocks, the position information represents the position at which the unit storage block is stored, and the scramble information represents whether the unit storage block is scrambled.

11. A method for storing digital broadcasting data, comprising the steps of:
receiving and processing digital broadcasting data and outputting a transport stream;
when the output transport stream has a size greater than a unit storage block, outputting the unit storage block;
generating a block header corresponding to the output unit storage block; and
storing a unit block including the output unit storage block and the generated block header.
